# EUROPÄISCHE PATENTSCHRIFT

(11) **EP 2 746 204 B1**
(45) Veröffentlichungstag und Bekanntmachung des Hinweises auf die Patenterteilung: **16.05.2018**
(21) Anmeldenummer: 13195686.4
(22) Anmeldetag: 04.12.2013
(51) Int. Cl.: B65H 5/06, B65H 9/00, B65H 7/08

(54) **Vorrichtung und Verfahren zum Drehen von flachen Gütern**
Method and device for rotating flat objects
Dispositif et procédé destinés à faire tourner des objets plats

(30) Priorität: 20.12.2012 DE 102012112718
(43) Veröffentlichungstag der Anmeldung: 25.06.2014
(73) Patentinhaber: BÖWE SYSTEC GmbH, 86159 Augsburg (DE)
(72) Erfinder: Höpner, Bernd, 86159 Augsburg (DE)
(74) Vertreter: Charrier Rapp & Liebau

(56) Entgegenhaltungen:
- EP-A2- 1 842 813
- EP-A2- 2 006 226
- US-A1- 2008 006 992
- US-A1- 2009 107 892

## Beschreibung

Die Erfindung betrifft eine Vorrichtung zum Drehen von in einer Transportrichtung bewegten flachen Gütern nach dem Oberbegriff des Anspruchs 1 sowie ein entsprechendes Verfahren nach dem Oberbegriff des Anspruchs 2.

Vorrichtungen der gattungsgemäßen Art werden beispielsweise in papierverarbeitenden Maschinen, wie z. B. Kuvertiermaschinen, Druckern oder Kopierern eingesetzt. Bei dem zu drehenden Gut kann es sich beispielsweise um einzelne Blätter oder Bögen oder um einen Blattstapel aus wenigstens zwei Blättern handeln. Gattungsgemäße Vorrichtungen können jedoch auch zum Drehen von anderen flachen Gütern verwendet werden, wie z. B. zum Drehen von Kunststofffolien, Kartonbögen oder dergleichen oder auch zum Drehen von verbundenen oder gehefteten Blättern in Form von Katalogen, Broschüren, Heften oder ähnlichen Produkten.

Aus der US3758104 ist eine Vorrichtung zum Drehen von rechteckigen Kartonbögen um 90° bekannt, welche in einer vorgegebenen Orientierung zur Weiterverarbeitung in einem Behälter abgelegt werden. Diese bekannte Vorrichtung umfasst ein Transportband, welches mit einer ersten Geschwindigkeit in einer Transportrichtung bewegt wird, um die um einen Winkel von 90° zu drehenden Kartonbögen in einer ersten Orientierung zu einer Dreheinrichtung zu bewegen. Die Dreheinrichtung weist einen ersten Spalt und einen zweiten Spalt auf, wobei ein erster Abschnitt des zu drehenden Kartonbogens in Eingriff mit dem ersten Spalt und ein zweiter Abschnitt des Kartonbogens in Eingriff mit dem zweiten Spalt gebracht wird. Der erste Spalt weist dabei eine erste Andrückwalze auf, welche zwischen ihrem Außenumfang und dem Transportband einen Spalt definiert, in dem der erste Abschnitt des Kartonbogens in Eingriff gebracht wird. Der zweite Spalt ist durch ein Drehrollenpaar mit einer angetriebenen Drehrolle und einer Andrückrolle definiert, zwischen deren Außenumfang der zweite Abschnitt des zu drehenden Kartonbogens eingreift. Die angetriebene Rolle des Drehrollenpaars wird zum Drehen des Kartonbogens mit einer Geschwindigkeit angetrieben, welche unterschiedlich zur Transportgeschwindigkeit der Transportbahn ist.

Die EP 0 814 041 B1 offenbart ein Verfahren zur Drehung von Bogen von einer ersten Orientierung in eine dazu senkrechte Orientierung sowie eine Bogenstapelvorrichtung, in der zu stapelnde Bogen gemäß dem Verfahren von einer ersten Orientierung in eine dazu senkrecht stehende Orientierung gedreht werden. Die zu drehenden Bogen werden während des Drehens gleichmäßig zwischen einer stromaufwärts und einer stromabwärts gelegenen Position bewegt und in einer dazwischen liegenden Bewegungsphase differentiell bewegt, ohne dass die Geschwindigkeitskomponente in Bogenlaufrichtung geändert wird. In der dazwischenlegenden Bewegungsphase (Drehphase) wird der Bogen mit einem Geschwindigkeits-Zeit-Profil bewegt, welches eine erste Geschwindigkeitsfunktion enthält, bei der die Bewegungsgeschwindigkeit vorübergehend um einen vorbestimmten Betrag erhöht wird und eine zweite Geschwindigkeitsfunktion, bei der die Bewegungsgeschwindigkeit vorübergehend um den selben vorbestimmten Betrag und zur gleichen Zeit vorübergehend verringert wird, um dadurch den Bogen um einen Drehwinkel zu drehen, wobei der Betrag des Drehwinkels durch die Dauer der erhöhten bzw. verringerten Bewegungsgeschwindigkeit bestimmt wird. Gleichzeitig mit der Drehung des Bogens erfolgt eine seitliche Verschiebung, welche dadurch bestimmt wird, dass der Zeitpunkt zu dem die Drehung des Bogens eingeleitet wird, bezüglich dem Eintreffen des Bogens an einem festen Bezugspunkt geeignet ausgewählt wird. Die Drehung des Bogens erfolgt dabei mittels einer Dreheinrichtung, welche transversal zur Bogenlaufrichtung voneinander beabstandete Rollenpaare aufweist, die von einem Schrittmotor angetrieben werden, um die vorgegebenen Geschwindigkeits-Zeit-Profile der Rollenpaare zu erzeugen.

Diese aus dem Stand der Technik bekannten Vorrichtungen und Verfahren zum Drehen von flachen Gütern wie Blätter, Blattstapel oder Bögen können wegen der beim Drehvorgang auftretenden Beschleunigungen und Verzögerungen nur bei vergleichsweise geringen Transportgeschwindigkeiten des zu drehenden Guts eingesetzt werden. In modernen papierverarbeitenden Maschinen mit hohen Durchsatzzahlen in der Größenordnung von 100.000 Gütern pro Stunde müssen die zu drehenden Güter beim Drehvorgang stark abgebremst und wieder beschleunigt werden, wenn der Drehvorgang um einen vorgegebenen Drehwinkel, der beispielsweise 90° beträgt, in einem einzigen Drehschritt ausgeführt wird. Zur Vermeidung von starken Verzögerungen und Beschleunigungen des Guts ist es aus dem Stand der Technik bereits bekannt, den gesamten Drehvorgang in zwei oder mehr Teilschritte aufzuteilen.

Die Aufteilung des gesamten Drehvorgangs in zwei oder mehr Teilschritte ermöglicht bei sehr hoher Taktleistung bzw. sinkender Zykluszeit, dass mehr Zeit und mehr Raum für die einzelnen Drehvorgänge zur Verfügung steht. Die Taktleistung kann bei einer Aufteilung des gesamten Drehvorgangs in zwei oder mehr Teilschritte erhöht werden, weil bereits das nachfolgende Gut in die erste Dreheinrichtung eingeführt werden kann, während sich das vorausgehende Gut noch im Drehvorgang in einer nachgeordneten Dreheinrichtung befindet.

So ist beispielsweise aus der DE 3718206 A1 eine Fördervorrichtung zum Drehen von entlang einer Wendestrecke bewegten Blattstapeln bekannt, welche einen Wendeförderer umfasst, der aus in zwei Bahnen nebeneinander verlaufenden und mit unterschiedlichen Geschwindigkeiten angetriebenen Förderbändern besteht, wobei eine erste Bahn ein mit einer ersten Geschwindigkeit antreibbares und umlaufendes Förderband aufweist und die zweite Bahn in Förderrichtung hintereinander wenigstens zwei umlaufende Förderer aufweist, welche mit einer von der ersten Geschwindigkeit unterschiedlichen Geschwindigkeit angetrieben werden. Durch die unterschiedlichen Geschwindigkeiten der ersten Bahn und der mehreren Förderer der zweiten Bahn erfolgt eine Drehung der auf den beiden Bahnen aufliegenden Blattstapel um einen vorgegebenen Drehwinkel, der von der Differenz der Geschwindigkeiten der ersten Bahn und der zweiten Bahn abhängt. Die Förderbänder der ersten und der zweiten Bahn sind dabei auf ihrer die Blattstapel tragenden Oberseite jeweils mit Borsten versehen, um eine gute Haftung zwischen der Oberseite der Förderbänder und der Unterseite der Blattstapel zu gewährleisten. Die Haftung des Blattstapels am Förderband liegt dabei permanent vor. Dies kann beim Übergang eines Blattstapels von einem Förderer der zweiten Bahn auf einen nachfolgenden Förderer der zweiten Bahn zu Problemen führen, da der Blattstapel zumindest kurzzeitig gleichzeitig mit zwei Förderern in Eingriff steht, welche jeweils ein ggf. unterschiedliches Drehmoment auf den Blattstapel ausüben. Dies kann zu Stauchungen oder Dehnungen der Blätter oder zu einem Verrutschen des Blattstapels führen.

Aus der US2009/0107892A1 ist eine Vorrichtung zum Drehen von Poststücken von einer ersten Orientierung in eine zweite Orientierung bekannt, welche entlang einer Transportbahn bewegt werden. Die Vorrichtung umfasst mehrere in Transportrichtung hintereinander angeordnete Rollenpaare, welche in Querrichtung zur Transportrichtung im Abstand zueinander angeordnet sind. Die in transversalem Abstand zueinander angeordneten Rollenpaare werden zum Drehen der Poststücke mit unterschiedlichen Geschwindigkeiten angetrieben, wobei dem Poststück in jedem der Rollenpaare eine Drehung um einen vorgegebenen Drehwinkel vermittelt wird, der von der Differenzgeschwindigkeit der Rollenpaare abhängt, welche für jedes Rollenpaar unterschiedlich sein kann. Die Anordnung der Rollenpaare umfasst am Beginn und am Ende jeweils ein Rollenpaar, mit dem das Poststück nicht gedreht sondern in Transportrichtung linear weiterbewegt wird. Während der Drehung eines Poststücks durch die in transversalem Abstand zueinander angeordneten Rollenpaare wird das Poststück in Transportrichtung weiterbewegt. Der laterale Abstand von korrespondierenden Rollen eines Rollenpaars kann dabei eingestellt werden, um eine definierte Drehung des Poststücks in dem betreffenden Rollenpaar zu erzeugen und einen Versatz des Poststücks einzustellen.

Die bekannten Drehvorrichtungen und Verfahren, in denen der gesamte Drehvorgang in wenigstens zwei Teilschritten durchgeführt wird, erweisen sich allerdings als nachteilig, weil der Abstand der Drehpunkte in lateraler Richtung (Transportrichtung) fest vorgegeben ist und nicht angepasst werden kann. Dies ist insbesondere dann nachteilig, wenn mit derselben Drehvorrichtung Güter, beispielsweise Blätter, mit unterschiedlichen Formaten verarbeitet werden sollen. Weiterhin besteht bei den bekannten Drehvorrichtungen und Verfahren, in denen der gesamte Drehvorgang in Teilschritten in mehreren hintereinander angeordneten Dreheinrichtungen durchgeführt wird, die Gefahr, dass es bei der Übergabe des Guts von einer Dreheinrichtung an die nachfolgende Dreheinrichtung zu Stauchungen oder Dehnungen des Guts kommt, welche das Gut beschädigen oder zu Störungen in den Dreheinrichtungen führen können. In den bekannten Drehvorrichtungen sind die in Transportrichtung hintereinander liegenden Dreheinrichtungen in einem festen und kurzen Abstand zueinander angeordnet. Dies führt insbesondere bei der Verarbeitung von Gütern mit größeren Abmessungen dazu, dass sich ein Gut gleichzeitig in Eingriff mit zwei benachbarten Dreheinrichtungen befinden kann, was dazu führt, dass das Gut gedehnt, gestaucht oder verbogen und dadurch beschädigt werden kann.

Hiervon ausgehend liegt der Erfindung die Aufgabe zugrunde, eine Vorrichtung und ein Verfahren zum Drehen von in einer Transportrichtung bewegten flachen Gütern aufzuzeigen, mit denen Güter unterschiedlichen Formats mit einem möglichst hohen Durchsatz und möglichst störungsfrei verarbeitet werden können. Die zu drehenden Güter sollen dabei schonend behandelt werden, so dass es beim Drehvorgang nicht zu Beschädigungen des Guts kommen kann.

Diese Aufgaben werden mit einer Vorrichtung mit den Merkmalen des Anspruchs 1 sowie mit dem Verfahren mit den Merkmalen des Anspruchs 2 gelöst. Bevorzugte Ausführungsformen der Vorrichtung und der Verfahren sind den abhängigen Ansprüchen zu entnehmen.

In der erfindungsgemäßen Vorrichtung und dem erfindungsgemäßen Verfahren wird die Drehung eines Guts, das sich in einer Transportrichtung bewegt, um den vorgegebenen Gesamt-Drehwinkel in zwei oder mehr Teilschritte aufgeteilt, wobei jeder Teilschritt der Drehung in einer dafür vorgesehenen Dreheinrichtung erfolgt. Die erfindungsgemäße Vorrichtung enthält hierfür wenigstens eine erste Dreheinrichtung und eine zweite Dreheinrichtung, welche in Transportrichtung hintereinander und im Abstand zueinander angeordnet sind und jeweils Drehmittel umfassen, welche das Gut zum Drehen in Eingriff nehmen. In der ersten Dreheinrichtung wird das Gut um einen ersten Drehwinkel und in der zweiten Dreheinrichtung um einen zweiten Drehwinkel und gegebenenfalls in weiteren, in Transportrichtung hintereinander angeordneten Dreheinrichtungen um weitere Drehwinkel gedreht, bis der Gesamt-Drehwinkel erreicht ist. Gemäß der Erfindung umfasst zumindest die erste und die zweite Dreheinrichtung und zweckmäßig jede weitere ggf. vorhandene Dreheinrichtung schaltbare Eingriffsmittel, mit denen die Drehmittel zu ausgewählten Zeitpunkten in oder außer Eingriff mit dem Gut gebracht werden können. Dadurch kann der Drehvorgang in der ersten Dreheinrichtung und der zweiten Dreheinrichtung entkoppelt und sicher gestellt werden, dass sich das Gut während eines Drehvorgangs immer nur mit einer Dreheinrichtung in Eingriff befindet, so dass es nicht zu Stauchungen, Dehnungen oder Verwindungen des Guts kommen kann.

Durch das Entkoppeln der Drehvorgänge in der ersten Dreheinrichtung und der zweiten Dreheinrichtung kann ferner der Abstand der Drehpunkte unabhängig vom Format des Guts gewählt werden. Weiterhin kann der Beginn des Drehvorgangs in der ersten bzw. der zweiten Dreheinrichtung beliebig ausgewählt und beispielsweise an das Format des Guts oder der nach dem Drehvorgang gewünschten Lage und Orientierung des Guts angepasst werden. Dadurch kann beispielsweise ein seitlicher Versatz des Guts in lateraler Richtung (quer zur Transportrichtung) eingestellt oder ausgeglichen werden. Durch das Aufteilen des gesamten Drehvorgangs um den Gesamt-Drehwinkel in wenigstens zwei Teilschritte, mit einem ersten Teilschritt, in dem das Gut um den ersten Drehwinkel gedreht wird und einem zweiten Teilschritt, in dem das Gut um den zweiten Drehwinkel gedreht wird, steht für die Gesamtdrehung eine längere Drehzeit zur Verfügung (bei gleichbleibender Transportgeschwindigkeit des Guts längs der Transportrichtung), weshalb große Beschleunigungen des Guts vor und nach den Drehvorgängen vermieden werden können.

In dem erfindungsgemäßen Verfahren ist vorgesehen, dass die Drehmittel der ersten Dreheinrichtung zu ausgewählten Zeitpunkten durch schaltbare Eingriffsmittel außer Eingriff mit dem Gut gebracht werden, während sich das Gut in Eingriff mit den Drehmitteln der zweiten Dreheinrichtung befindet. Dadurch kann eine definierte Übergabe des Guts von der ersten Dreheinrichtung an die zweite Dreheinrichtung erfolgen, ohne dass das Gut gedehnt, gestaucht oder verbogen wird.

Zur Drehung des Guts wird dieses zumindest während einer ersten Drehdauer (t1) von den schaltbaren Eingriffsmitteln in Eingriff mit den Drehmitteln der ersten Dreheinrichtung gebracht, um das Gut zunächst in der ersten Dreheinrichtung um einen ersten Drehwinkel (α1) zu drehen. Während dieser ersten Drehdauer (t1) bringen die schaltbaren Eingriffsmittel das Gut außer Eingriff mit den Drehmitteln der zweiten Dreheinrichtung, so dass das Gut nur mit der ersten Dreheinrichtung in Eingriff steht. Nach Ablauf der ersten Drehdauer (t1) wird das Gut dann wenigstens über eine zweite Drehdauer (t2) von den schaltbaren Eingriffsmitteln in Eingriff mit den Drehmitteln der zweiten Dreheinrichtung gebracht, um das Gut in der zweiten Dreheinrichtung um einen zweiten Drehwinkel zu drehen. Die schaltbaren Eingriffsmittel bringen das Gut während dieser zweiten Drehdauer (t2) außer Eingriff mit den Drehmitteln der ersten Dreheinrichtung, so dass das Gut nur mit der zweiten Dreheinrichtung in Eingriff steht. Nach Ablauf der ersten Drehdauer (t1) wird das Gut zweckmäßig zunächst ohne Drehung linear in Transportrichtung (x) weiter bewegt und anschließend an die zweite Dreheinrichtung übergeben, wobei zur Übergabe des Guts von der ersten Dreheinrichtung an die zweite Dreheinrichtung die schaltbaren Eingriffsmittel das Gut außer Eingriff mit den Drehmitteln der ersten Dreheinrichtung und in Eingriff mit den Drehmitteln der zweiten Dreheinrichtung bringen.

Zur Übergabe des Guts von der ersten Dreheinrichtung an die zweite Dreheinrichtung schließt sich also zweckmäßig an den ersten Drehvorgang in der ersten Dreheinrichtung eine von der Drehphase entkoppelte Transportphase an, in der das um den ersten Drehwinkel gedrehte Gut zunächst (ohne Drehung) linear in Transportrichtung weiter transportiert und dann an die zweite Dreheinrichtung übergeben wird, indem die schaltbaren Eingriffsmittel die Drehmittel der ersten Dreheinrichtung außer Eingriff mit dem Gut und die Drehmittel der zweiten Dreheinrichtung in Eingriff mit dem Gut bringen. Dabei ist es zweckmäßig, wenn das Gut während einer Überlappungszeit sowohl in Eingriff mit den Drehmitteln der ersten Dreheinrichtung als auch in Eingriff mit den Drehmitteln der zweiten Dreheinrichtung gehalten wird und das Gut während dieser Überlappungszeit bevorzugt mit gleichbleibender Geschwindigkeit linear und ohne Drehung in Transportrichtung bewegt wird. Dies stellt sicher, dass das Gut zu jeder Zeit sicher mit mindestens einer Dreheinrichtung in Eingriff steht und während des gesamten Vorgangs mit gleichbleibender Geschwindigkeit in Transportrichtung weiterbewegt werden kann.

Nach Übergabe an die zweite Dreheinrichtung wird das Gut bevorzugt zunächst ohne Drehung linear in Transportrichtung (x) weiter bewegt und anschließend während einer zweiten Drehdauer (t2) in der zweiten Dreheinrichtung um einen vorgegebenen zweiten Drehwinkel gedreht. Auf diese Weise wird das Gut in wenigstens zwei entkoppelten Drehphasen um einen Gesamt-Drehwinkel α gedreht, wobei die Summe des ersten Drehwinkels α1 und des zweiten Drehwinkels α2 dem Gesamt-Drehwinkel α entspricht, welcher bspw. 90° beträgt. Der gesamte Drehvorgang kann jedoch auch in mehr als zwei Drehphasen aufgeteilt werden, wozu sich dann weitere Dreheinrichtungen in Transportrichtung hinter der zweiten Dreheinrichtung anschließen.

Bevorzugt wird der gesamte Drehvorgang in dem erfindungsgemäßen Verfahren auf zwei Teilschritte aufgeteilt, so dass die Summe des ersten Drehwinkels in dem ersten Drehvorgang und des zweiten Drehwinkels in dem zweiten Drehvorgang den gewünschten Gesamt-Drehwinkel ergibt. Der gewünschte Gesamt-Drehwinkel beträgt dabei beispielsweise 90°, wenn das zu drehende Gut von einer ersten Orientierung im Hochformat in eine zweite Orientierung im Querformat (oder umgekehrt) gedreht werden soll. Das erfindungsgemäße Verfahren ist jedoch nicht auf die Drehung von Gütern um einen Gesamt-Drehwinkel von 90° beschränkt. Vielmehr kann mit dem erfindungsgemäßen Verfahren jeder beliebige Drehwinkel erzielt werden. Der in den einzelnen Drehschritten erfolgende Drehwinkel (erster Drehwinkel, zweiter Drehwinkel und gegebenenfalls weitere Drehwinkel in weiteren Dreheinrichtungen der erfindungsgemäßen Vorrichtung) hängt dabei von einer Geschwindigkeitsdifferenz der Drehmittel in der ersten bzw. zweiten Dreheinrichtung oder gegebenenfalls weiteren vorhandenen Dreheinrichtungen ab.

In einem bevorzugten Ausführungsbeispiel der Erfindung ist vorgesehen, dass jede Dreheinrichtung erste Drehmittel und zweite Drehmittel aufweist, welche in Querrichtung (y) zur Transportrichtung (x) in einem lateralen Abstand zueinander angeordnet sind und von einem Motor entweder mit unterschiedlichen Drehgeschwindigkeiten drehend angetrieben werden, um das Gut zu Drehen oder mit gleichen Drehgeschwindigkeiten drehend angetrieben werden, um das Gut (ohne Drehung) linear zu bewegen, während sich das Gut in Eingriff mit den Drehmitteln befindet. Bevorzugt ist der laterale Abstand der korrespondierenden Drehmittel der ersten Dreheinrichtung und/oder der zweiten Dreheinrichtung einstellbar und insbesondere an das Format des Guts anpassbar. Dies verbessert noch die Verwendung der erfindungsgemäßen Vorrichtung für das Drehen unterschiedlicher Gütern mit verschiedenen Formaten und Größen.

Bei den Drehmitteln handelt es sich in einem Ausführungsbeispiel der Erfindung um Drehrollenpaare mit zueinander korrespondierenden Rollen. Die schaltbaren Eingriffsmittel sind dabei so eingerichtet, dass sie korrespondierende Rollen der Drehrollenpaare aufeinander zu bzw. voneinander weg bewegen, um das Gut in bzw. außer Eingriff mit den korrespondierenden Rollen der Drehrollenpaare zu bringen. In diesem Ausführungsbeispiel weisen die erste Dreheinrichtung und/oder die zweite Dreheinrichtung ein erstes Drehrollenpaar und ein zweites Drehrollenpaar auf, wobei das erste Drehrollenpaar und das zweite Drehrollenpaar in Querrichtung (y) zur Transportrichtung (x) in einem lateralen Abstand zueinander angeordnet sind und zum Drehen des Guts mit unterschiedlichen Drehgeschwindigkeiten von einem Motor drehend angetrieben werden.

Bei den Drehmitteln handelt es sich in einem alternativen Ausführungsbeispiel der Erfindung um sich bewegende Transportbänder mit dazu korrespondierenden Drehrollen. In diesem Ausführungsbeispiel bewegen die schaltbaren Eingriffsmittel die Drehrollen auf das jeweils zugeordnete Transportband zu bzw. davon weg, um das Gut in bzw. außer Eingriff mit den Drehmitteln zu bringen.

In einem weiteren alternativen Ausführungsbeispiel der Erfindung sind die Drehmittel von mit unterschiedlicher Geschwindigkeit antreibbaren Vakuumbändern gebildet, welche schaltbar mit Unterdruck beaufschlagbar sind. In diesem Ausführungsbeispiel beaufschlagen die schaltbaren Eingriffsmittel die Vakuumbänder mit Unterdruck, um das Gut in Eingriff mit den Vakuumbändern zu bringen. Um das Gut außer Eingriff mit den Vakuumbändern zu bringen wird der Unterdruck von den schaltbaren Eingriffsmitteln abgeschaltet.

In Transportrichtung gesehen vor der ersten Dreheinrichtung kann zweckmäßig eine Einzugseinrichtung angeordnet sein, welche das sich in der ersten Orientierung befindliche Gut zunächst linear in Transportrichtung bewegt und dann an die erste Dreheinrichtung übergibt. In Transportrichtung gesehen nach der zweiten Dreheinrichtung kann gegebenenfalls eine weitere Transportrichtung angeordnet sein, welche das aus der zweiten Dreheinrichtung kommende Gut übernimmt und zunächst linear in Transportrichtung weiterbewegt und anschließend an eine gegebenenfalls vorhandene weitere Dreheinrichtung oder an eine andere Nachläufereinrichtung, wie z.B. eine Sammelstation oder eine Falzstation oder eine Kuvertiereinrichtung übergibt. Bei der Nachläufereinrichtung kann es sich insbesondere um eine Ausrichteinrichtung zum Ausrichten des Guts handeln. Mit einer solchen Ausrichteinrichtung können etwaige Winkelfehler, die bereits beim Einlauf des Guts in die erste Dreheinrichtung vorhanden waren, oder die während des Drehvorgangs in der ersten oder zweiten Dreheinrichtung entstanden sind, ausgeglichen werden, um das gedrehte Gut am Ende des gesamten Drehvorgangs in einer perfekten Lage und Orientierung zu erhalten.

Diese und weitere Merkmale und Vorteile der Erfindung ergeben sich aus den nachfolgend unter Bezugnahme auf die begleitenden Zeichnungen näher beschriebenen Ausführungsbeispielen. Die Zeichnungen zeigen:
- **Fig. 1:**: schematische Darstellung einer erfindungsgemäßen Vorrichtung zum Drehen von flachen Gütern in einer perspektivischen Draufsicht und in einer ersten Phase des erfindungsgemäßen Verfahrens,
- **Fig. 2:**: schematische Darstellung der Vorrichtung von Figur 1 in einer perspektivischen Seitenansicht und in einer ersten Phase des erfindungsgemäßen Verfahrens;
- **Fig. 3:**: schematische Darstellungen der Vorrichtung von Figur 1 in verschiedenen Phasen des erfindungsgemäßen Verfahrens in einer perspektivischen Draufsicht (Figuren 3a, 3c, 3e, 3g, 3j, 3l) und in einer perspektivischen Seitenansicht (Figuren 3b, 3d, 3f, 3h, 3k, 3m);

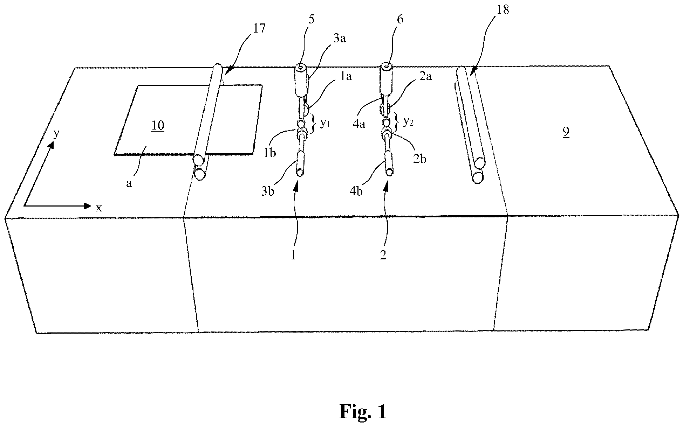

Die in Figur 1 schematisch dargestellte Vorrichtung zum Drehen von flachen Gütern 10 um eine senkrecht zur Ebene des Guts 10 stehende Achse umfasst eine (hier nur schematisch dargestellte) Einzugseinrichtung 17, welche die Güter 10 linear in Transportrichtung x bewegt. Bei der Einzugseinrichtung 17 kann es sich beispielsweise um ein Transportband, insbesondere ein Vakuumband, oder - wie in in den Figuren dargestellt - um Transportrollen oder dergleichen handeln. Die Vorrichtung umfasst weiterhin in Transportrichtung x nach der Einzugseinrichtung 17 angeordnet eine erste Dreheinrichtung 1 und eine zweite Dreheinrichtung 2. An die zweite Dreheinrichtung 2 schließt sich in Transportrichtung x eine Transporteinrichtung 18 sowie eine Nachläufereinrichtung 9 an (welche hier nur schematisch dargestellt ist).

In dem in Figur 1 zeichnerisch dargestellten Ausführungsbeispiel sind die beiden Dreheinrichtungen 1, 2 im Wesentlichen identisch aufgebaut und umfassen jeweils Drehmittel 1a, 1b; 2a, 2b zum Drehen des Guts 10. In der ersten Dreheinrichtung 1 wird das Gut um einen vorgegebenen ersten Drehwinkel α1 gedreht und in der zweiten Dreheinrichtung 2 wird das Gut 10 später um einen vorgegebenen zweiten Drehwinkel α2 gedreht. Durch die Drehung des Guts 10 in der ersten Dreheinrichtung 1 um den ersten Drehwinkel α1 und anschließend in der zweiten Dreheinrichtung 2 um den zweiten Drehwinkel α2 erhält das Gut in der Vorrichtung eine Gesamtdrehung um einen Gesamt-Drehwinkel α = α1+α2. In vielen Anwendungen ist eine Drehung des Guts 10 um einen Gesamt-Drehwinkel von α=90° gefordert. In diesem Anwendungsfall können die beiden vorgegebenen Drehwinkel α1 und α2 beispielsweise symmetrisch zu α1=α2=45° gewählt werden. Es ist jedoch auch eine asymmetrische Aufteilung der beiden Teil-Drehungen in der ersten Dreheinrichtung 1 und der zweiten Dreheinrichtung 2 möglich, wie z. B. α1=30° und α2=60° oder umgekehrt.

Die Drehmittel der beiden Dreheinrichtungen 1 und 2 umfassen bei dem in Figur 1 gezeigten Ausführungsbeispiel jeweils ein erstes Drehrollenpaar 1a bzw. 2a und ein zweites Drehrollenpaar 1b bzw. 2b. Das erste Drehrollenpaar 1a, 2a und das zweite Drehrollenpaar 1b, 2b sind dabei jeweils in Querrichtung y zur Transportrichtung x in einem lateralen Abstand y1 bzw. y2 zueinander angeordnet. Jedes Drehrollenpaar 1a, 2a; 1b, 2b umfasst dabei jeweils eine obere Rolle und eine untere Rolle, welche jeweils um eine in Querrichtung y verlaufende Achse drehbar gelagert sind. Zwischen jeder oberen Rolle und der ihr zugeordneten unteren Rolle ist ein Spalt ausgebildet, in dem das Gut 10 in Eingriff gebracht werden kann. Von jedem Drehrollenpaar 1a, 1b bzw. 2a, 2b ist entweder die obere Rolle und/oder die untere Rolle mit einem Motor 3a, 3b; 4a, 4b gekoppelt und wird von diesem Motor drehend angetrieben. Zum Drehen eines Guts 10, das in Eingriff mit dem ersten Drehrollenpaar 1a und dem zweiten Drehrollenpaar 1b der ersten Dreheinrichtung 1 gebracht worden ist, können die Rollen des ersten Drehrollenpaars 1a und die Rollen des zweiten Drehrollenpaars 1b mit unterschiedlichen Geschwindigkeiten von dem jeweils zugeordneten Motor 3a, 3b angetrieben werden. Beim Einstellen unterschiedlicher Geschwindigkeiten des ersten Drehrollenpaars 1a und des zweiten Drehrollenpaars 1b wird das sich im Eingriff mit der ersten Dreheinrichtung 1 befindliche Gut 10 um einen vorgegebenen Drehwinkel α1 gedreht. Der Drehwinkel α1 hängt dabei von der Differenzgeschwindigkeit zwischen dem ersten Drehrollenpaar 1a und dem zweiten Drehrollenpaar 1b ab. Entsprechend kann ein Gut 10, das in Eingriff mit den beiden Drehrollenpaaren 2a und 2b der zweiten Dreheinrichtung 2 steht, um einen vorgegebenen Drehwinkel α2 gedreht werden, indem die Rollen des ersten Drehrollenrollenpaars 2a und die Rollen des zweiten Drehrollenpaars 2b von den zugeordneten Motoren 4a, 4b mit unterschiedlichen Geschwindigkeiten angetrieben werden. Bevorzugt werden die sich auf einer Seite in Bezug auf die Längsmittelebene der Vorrichtung befindlichen Drehrollenpaare 1a, 2a oder 1b, 2b mit einer konstanten vorgegebenen Geschwindigkeit angetrieben, welche zweckmäßig der Transportgeschwindigkeit der Einzugseinrichtung 17 entspricht. Zum Drehen des Guts 10 wird dann das lateral dazu gegenüberliegende und korrespondierende Drehrollenpaar mit einer niedrigeren oder einer höheren Geschwindigkeit angetrieben, um dadurch eine Drehung des Guts 10 zu bewirken.

Die Drehmittel 1a, 1b; 2a 2b der ersten und der der zweiten Dreheinrichtung können auch jeweils mit derselben Geschwindigkeit von den zugeordneten Motoren 3a, 3b; 4a, 4b angetrieben werden. In diesem Fall erzeugen die Drehmittel 1a, 1b; 2a 2b eine lineare Bewegung des Guts 10 (ohne Drehung) in Transportrichtung x, wenn sich das Gut mit den Drehmitteln 1a, 1b der ersten Dreheinrichtung 1 bzw. mit den Drehmitteln 2a, 2b der zweiten Dreheinrichtung 2 in Eingriff befindet.

Den Drehmitteln 1a, 1b; 2a 2b der ersten und der der zweiten Dreheinrichtung sind jeweils schaltbare Eingriffsmittel 5 und 6 zugeordnet. Über diese schaltbaren Eingriffsmittel 5 und 6 können die Drehmittel 1a, 1b der ersten Dreheinrichtung 1 und die Drehmittel 2a 2b der zweiten Dreheinrichtung 2 jeweils unabhängig voneinander in oder außer Eingriff mit einem Gut 10 gebracht werden. Zur Steuerung der schaltbaren Eingriffsmittel 5 und 6 sind diese mit einer (hier zeichnerisch nicht dargestellten) Steuereinrichtung gekoppelt. Über die Steuereinrichtung werden die Zeitpunkte und Phasen festgelegt, in denen das Gut in oder außer Eingriff mit den Drehmitteln 1a, 1b; 2a 2b der ersten bzw. der zweiten Dreheinrichtung gebracht wird. Die Steuereinrichtung legt auch fest, mit welchen Geschwindigkeiten die Motoren 3a, 3b und 4a, 4b der ersten bzw. der zweiten Dreheinrichtung laufen. Dadurch kann über die Steuereinrichtung gesteuert werden, ob sich die Drehmittel 1a, 1b; 2a 2b der ersten bzw. der zweiten Dreheinrichtung mit unterschiedlichen oder mit gleichen Geschwindigkeiten drehen, um das Gut entweder zu drehen oder ohne Drehung linear zu transportieren.

Bei den schaltbaren Eingriffsmitteln 5 und 6 kann es sich bspw. um Hydraulik- oder Pneumatik-Zylinder oder um Motoren handeln, welche die Drehmittel 1a, 1b; 2a 2b der ersten bzw. der zweiten Dreheinrichtung in oder außer Eingriff mit dem Gut bringen. Wenn die Drehmittel jeweils durch korrespondierende Rollen gebildet sind, ist bspw. eine der Rollen an ein zugeordnetes Eingriffsmittel 5 bzw. 6 gekoppelt und das Eingriffsmittel 5 bzw. 6 kann die korrespondierenden Rollen aufeinander zu bzw. voneinander weg bewegen, um diese in bzw. außer Eingriff mit dem Gut 10 zu bringen.

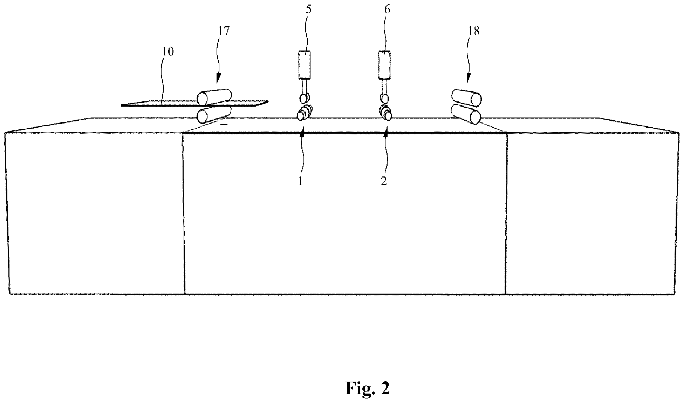

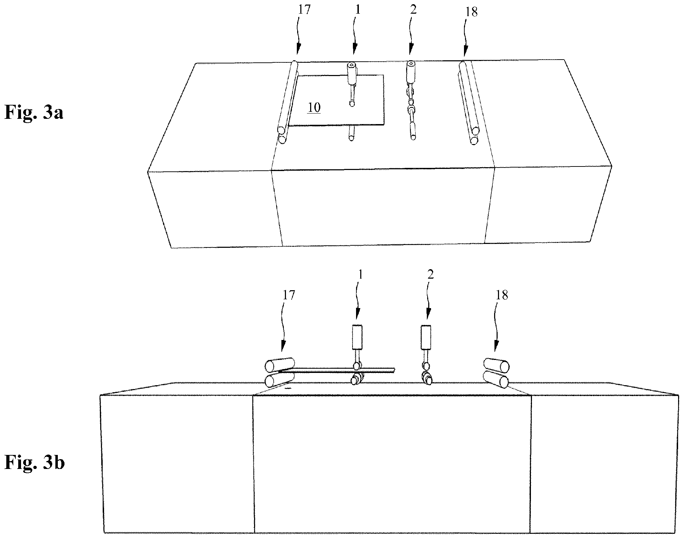

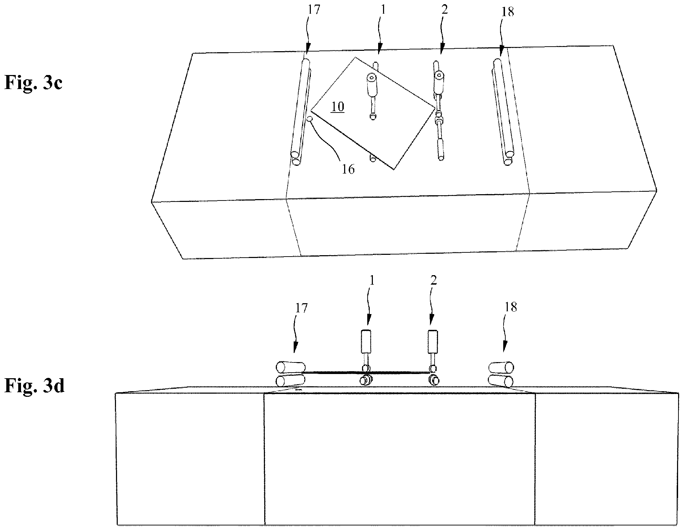

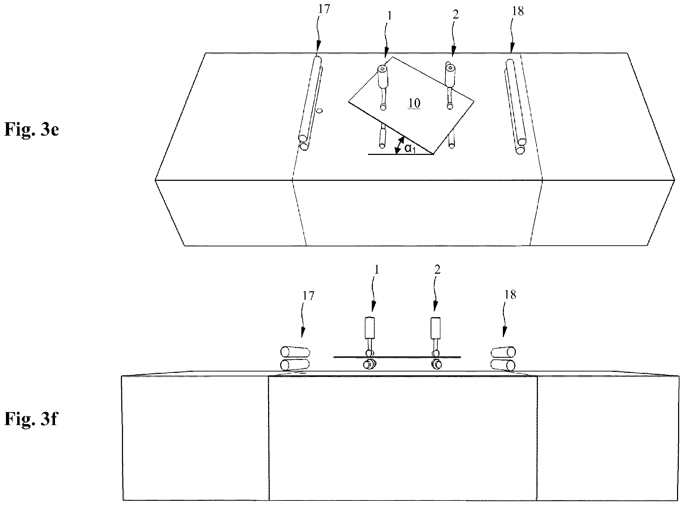

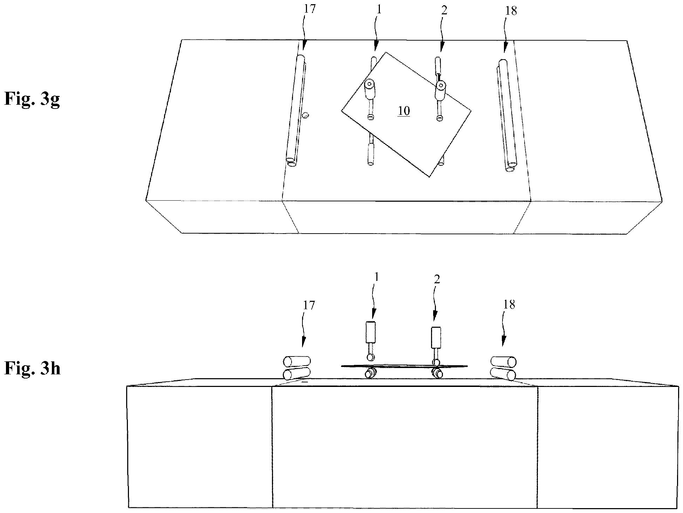

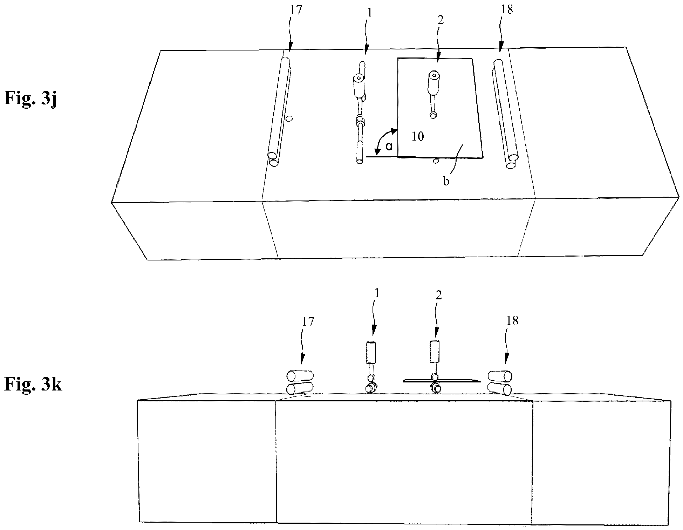

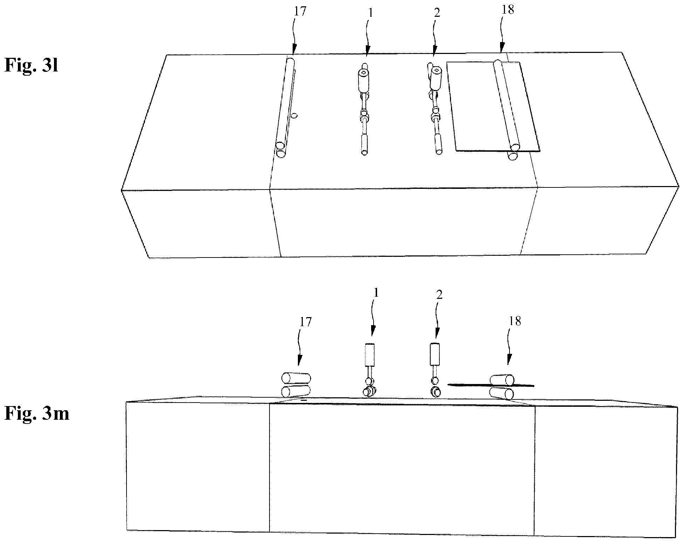

Zum Drehen eines Guts 10 um einen Gesamt-Drehwinkel α, der beispielsweise 90° betragen kann, wird die in den Figuren 1 und 2 gezeigte Vorrichtung wie folgt betrieben (Figur 3):
Die Einzugseinrichtung 17 bewegt das sich in einer ersten Orientierung a befindliche Gut 10 zweckmäßig mit konstanter Geschwindigkeit linear in Transportrichtung x zu der ersten Dreheinrichtung 1 (Figuren 3a und 3b). Die erste Dreheinrichtung 1 übernimmt das sich bewegende Gut 10, indem die schaltbaren Eingriffsmittel 5 der ersten Dreheinrichtung 1 die Drehmittel 1a, 1b in Eingriff mit dem Gut 10 bringt. Nach der Übernahme des Guts 10 durch die erste Dreheinrichtung 1 transportiert diese das Gut 10 unter Beibehaltung der (zweckmäßig konstanten) Transportgeschwindigkeit zunächst über eine vorgegebene Einlaufstrecke in Transportrichtung x linear weiter. Hierzu werden die Drehrollenpaare 1a, 1b der ersten Dreheinrichtung 1 von den zugeordneten Motoren 3a, 3b mit gleicher Geschwindigkeit angetrieben. Ab einem wählbaren Zeitpunkt, der von der Steuereinrichtung vorgegeben wird, beginnt die erste Dreheinrichtung 1 das sich mit dieser im Eingriff stehende Gut 10 über eine von der Steuereinrichtung vorgegebene erste Drehdauer t1 zu drehen (Figuren 3c und 3d), indem die Geschwindigkeit eines Drehrollenpaars 1a oder 1b gegenüber dem anderen Drehrollenpaar 1b oder 1a verändert wird. Durch die unterschiedlichen Geschwindigkeiten des ersten Drehrollenpaars 1a und des zweiten Drehrollenpaars 1b wird das Gut 10 gedreht, bis ein vorgegebener erster Drehwinkel α1 erreicht ist (Figur 2d). Der erste Drehwinkel α1, welcher dem Gut 10 in der ersten Dreheinrichtung 1 vermittelt wird, hängt dabei von der Differenz der Geschwindigkeiten des ersten Drehrollenpaars 1a und des zweiten Drehrollenpaars 1b der ersten Dreheinrichtung 1 ab und kann durch Einstellung dieser Differenzgeschwindigkeit entsprechend gesteuert werden. Während das Gut 10 in der ersten Dreheinrichtung 1 gedreht wird, befindet es sich nicht im Eingriff mit den Drehrollenpaaren 2a, 2b der zweiten Dreheinrichtung, wie aus Figur 3d ersichtlich. Wenn das Gut um den vorgegebenen ersten Drehwinkel α1 gedreht worden ist, wird die Geschwindigkeit des Drehrollenpaars 1a oder 1b wieder an die Geschwindigkeit des anderen Drehrollenpaars 1b oder 1a angeglichen, so dass beide Drehrollenpaare 1a, 1b der ersten Dreheinrichtung 1 wieder mit gleicher Geschwindigkeit angetrieben werden. Dadurch wird das Gut 10 in der ersten Transporteinrichtung 1 linear in Transportrichtung x weiter bewegt (Figuren 3e und 3f). Zweckmäßig erfolgt auch dieser lineare Transport in der ersten Dreheinrichtung 1 mit der von der Einzugseinrichtung 17 vorgegebenen konstanten Transportgeschwindigkeit. Das Gut 10 wird auf diese Weise in der ersten Dreheinrichtung 1 um eine vorgegeben Auslaufstrecke linear in Transportrichtung x weiterbewegt und anschließend an die nachgeschaltete zweite Dreheinrichtung 2 übergeben.

Zur Übernahme des um den ersten Drehwinkel α1 gedrehten Guts 10 wird dieses von der zweiten Dreheinrichtung 2 in Eingriff genommen (Figur 3f), indem das Gut 10 in Eingriff mit den Drehmitteln 2a, 2b der zweiten Dreheinrichtung 2 gebracht wird. Zweckmäßig bleibt das Gut 10 während einer Überlappungszeit t3 mit beiden Dreheinrichtungen 1 und 2 im Eingriff. Nach Ablauf der von der Steuereinrichtung vorgegebenen Überlappungszeit t3 bringen die schaltbaren Eingriffsmittel 5 der ersten Dreheinrichtung 1 das Gut 10 außer Eingriff mit deren Drehmittel 1a, 1b, indem sie bspw. die korrespondierenden Rollen der Drehrollenpaare 1a und 1b voneinander weg bewegen, wie in Figur 3h gezeigt. Das Gut 10 befindet sich dann nur noch in Eingriff mit den Drehmitteln 2a und 2b der zweiten Dreheinrichtung 2. Diese werden zunächst noch mit gleicher Geschwindigkeit von den Motoren 4a, 4b angetrieben, um das Gut 10 (ohne Drehung) in der zweiten Dreheinrichtung 2 um eine vorgegebene Einlaufstrecke linear weiter zu bewegen (Figur 3g). Sobald das Gut 10 die erste Dreheinrichtung 1 verlassen hat und nicht mehr mit den Drehmitteln 1a, 1b im Eingriff steht, kann bereits ein nachfolgendes Gut zur seriellen Verarbeitung der Güter an die erste Dreheinrichtung 1 übergeben und dort wie oben beschrieben gedreht werden. Dies führt zu einer erheblichen Verringerung der Zykluszeiten und damit zu einer Erhöhung der Taktleistung und des Durchsatzes.

Nach einer bestimmten, von der Steuereinrichtung vorgebbaren Zeitdauer werden die Drehrollenpaare 2a, 2b der zweiten Dreheinrichtung 2 während einer zweiten Drehdauer t2 mit unterschiedlichen Geschwindigkeiten angetrieben, wodurch das Gut 10 in der zweiten Dreheinrichtung 2 weiter gedreht wird (Figuren 3j und 3k). Die Drehung in der zweiten Dreheinrichtung 2 erfolgt solange, bis ein vorgegebener zweiter Drehwinkel α2 erreicht ist (Figur 3j). Dieser hängt von der Differenzgeschwindigkeit der Drehrollenpaare 2a, 2b der zweiten Dreheinrichtung 2 ab, welche entsprechend eingestellt wird. Ist das Gut 10 in der zweiten Dreheinrichtung 2 um den vorgegebenen zweiten Drehwinkel α2 gedreht worden, werden die Geschwindigkeiten des ersten Drehrollenpaars 2a und des zweiten Drehrollenpaars 2b der zweiten Dreheinrichtung 2 wieder aneinander angeglichen und mit gleicher Geschwindigkeit von den zugeordneten Motoren 4a, 4b angetrieben. Dadurch wird das dann um den Gesamt-Drehwinkel α = α1+α2 gedrehte Gut 10 (Figur 3j) in der zweiten Dreheinrichtung 2 um eine vorgegebene Auslaufstrecke linear in Transportrichtung x weiterbewegt. Die Geschwindigkeit dieser linearen Bewegung des dann sich in seiner zweiten Orientierung b befindlichen Guts 10, erfolgt auch hier zweckmäßig mit der von der Einzugseinrichtung 17 vorgegebenen Transportgeschwindigkeit. Bei einer Drehung des Guts 10 um einen Gesamt-Drehwinkel von α = 90° kann das Gut 10 dadurch beispielsweise von einer ersten Orientierung a im Hochformat in eine zweite Orientierung b im Querformat gedreht werden.

Die zweite Dreheinrichtung 2 führt das um den Gesamtdrehwinkel α gedrehte Gut 10 schließlich der nachgeschalteten Transporteinrichtung 18 zu (Figur 3f). Diese übernimmt das sich nun in der zweiten Orientierung b befindliche Gut 10 und transportiert es linear in Transportrichtung x zu einer sich anschließenden Nachläufereinrichtung 9 (Figuren 3l und 3m). Bei der Nachläufereinrichtung 9 kann es sich beispielsweise um eine Ausrichteinrichtung handeln, mit der eine Feinausrichtung der Orientierung und der Lage des gedrehten Guts 10 durchgeführt wird. Bei der Nachläufereinrichtung 9 kann es sich auch um eine Vorrichtung zur Weiterverarbeitung des Guts 10 handeln, wie z. B. eine Sammelstation oder eine Falzstation oder eine Kuvertiereinrichtung, welche das gedrehte Gut 10 in einen Umschlag einführt.

In einer weiteren, hier zeichnerisch nicht dargestellten Ausführungsform einer erfindungsgemäßen Vorrichtung sind die Drehmittel der ersten und der zweiten Dreheinrichtung jeweils durch umlaufende Vakuumbänder 1a, 1b und 2a, 2b gebildet, wobei korrespondierende Vakuumbänder 1a, 1b bzw. 2a, 2b in Querrichtung y in einem lateralen Abstand zueinander angeordnet sind und mit unterschiedlichen Geschwindigkeiten oder mit gleichen Geschwindigkeiten angetrieben werden, um das Gut 10 zu drehen oder es linear zu transportieren. Die Vakuumbänder 1a, 1b; 2a, 2b können dabei von Eingriffsmitteln 5, 6 an- bzw. abschaltbar mit Unterdruck beaufschlagt werden, um ein sich auf dem jeweiligen Vakuumband befindliches Gut 10 anzusaugen und in Eingriff mit der jeweiligen Dreheinrichtung 1, 2 zu bringen. Bei den Eingriffsmitteln 5 und 6 handelt es sich dabei um Pumpen und zugehörige Pumpleitungen mit schaltbaren Ventilen, welche die Vakuumbänder 1a, 1b an- und abschaltbar mit Unterdruck beaufschlagen können.

Die Erfindung ist nicht auf die hier zeichnerisch dargestellten Ausführungsbeispiele beschränkt. So können beispielsweise die Drehmittel der ersten Dreheinrichtung 1 und/oder der zweiten Dreheinrichtung 2 anders ausgestaltet sein. Statt zusammenwirkender Drehrollenpaare 1a, 2a; 1b, 2b können als Drehmittel beispielsweise auch mit Transportbändern oder -riemen und damit kooperierende Rollen verwendet werden. Grundsätzlich können als Drehmittel jegliche Einrichtungen verwendet werden, welche einem sich bewegenden Gut 10 eine definierte Drehung vermitteln können. Es ist weiterhin möglich die Drehmittel der ersten und/oder der zweiten Dreheinrichtung 1 bzw. 2 so auszubilden, dass diese einzeln und unabhängig voneinander das Gut in und außer Eingriff nehmen können. So kann bspw. realisiert werden, dass nur das Drehmittel 1a, nicht jedoch das dazu korrespondierende Drehmittel 1b der ersten Dreheinrichtung 1 das Gut in Eingriff nimmt.

Ergänzend können in den erfindungsgemäßen Vorrichtungen Sensoren, insbesondere optische Sensoren, verwendet werden, um die Lage und gegebenenfalls eine Orientierung des Guts 10 in verschiedenen Phasen des Drehvorgangs zu erfassen. Beispielhaft ist in Figur 3c ein Sensor 16 zur Erfassung der Vorderkante des Guts 10 dargestellt. Die von den Sensoren erfassten Signale werden hierbei an die Steuereinrichtung zur Steuerung der Dreheinrichtungen 1, 2 übermittelt und insbesondere zur Steuerung der Motoren 3a, 3b; 4a, 4b verwendet, welche die Drehmittel der ersten Dreheinrichtung 1 bzw. der zweiten Dreheinrichtung 2 antreiben. Durch die Verwendung solcher Sensoren ist es beispielsweise möglich, die Orientierung des Guts 10 in Zwischenstufen des Drehvorgangs zu erfassen und in den nachfolgenden Stufen zu korrigieren, falls eine Fehlorientierung durch die Sensoren erfasst worden ist.

In den hier beschriebenen Ausführungsbeispielen ist der gesamte Drehvorgang in zwei Teilschritte aufgeteilt worden, nämlich in einem ersten Teilschritt in der ersten Dreheinrichtung 1 und einem zweiten Teilschritt in der zweiten Dreheinrichtung 2. Es ist auch möglich, den Gesamtdrehvorgang in mehr als zwei Teilschritte aufzuteilen und hierfür weitere Dreheinrichtungen vorzusehen, welche sich dann in Transportrichtung x an die zweite Dreheinrichtung 2 bzw. die nachfolgende Transporteinrichtung 18 anschließen und/oder vor der ersten Dreheinrichtung 1 angeordnet sind.

## Patentansprüche

1. Vorrichtung zum Drehen von in einer Transportrichtung (x) bewegten flachen Gütern (10), insbesondere von Blättern oder Blattstapeln, von einer ersten Orientierung (a) in eine zweite Orientierung (b) um einen vorgegebenen Gesamt-Drehwinkel (α), mit einer ersten Dreheinrichtung (1), in der das Gut (10) zunächst um einen ersten Drehwinkel (α1) gedreht wird und mit mindestens einer zweiten Dreheinrichtung (2), in der das Gut (10) später um einen zweiten Drehwinkel (α2) gedreht wird, wobei die erste Dreheinrichtung (1) und die zweite Dreheinrichtung (2) in Transportrichtung (x) hintereinander angeordnet sind und jede Dreheinrichtung (1, 2) Drehmittel (1a, 1b; 2a, 2b) umfasst, welche das Gut (10) zum Drehen in Eingriff nehmen, **dadurch gekennzeichnet, dass** zumindest die erste Dreheinrichtung (1) schaltbare Eingriffsmittel (5, 6) aufweist, mit denen die Drehmittel (1a, 1b; 2a, 2b) zu ausgewählten Zeitpunkten in oder außer Eingriff mit dem Gut (10) gebracht werden können.

2. Verfahren zum Drehen von in einer Transportrichtung (x) bewegten flachen Gütern (10), insbesondere von Blättern oder Blattstapeln, von einer ersten Orientierung (a) in eine zweite Orientierung (b) um einen vorgegebenen Gesamt-Drehwinkel (α), mit einer ersten Dreheinrichtung (1), in der das Gut (10) zunächst um einen ersten Drehwinkel (α1) gedreht wird und mit mindestens einer zweiten Dreheinrichtung (2), in der das Gut (10) später um einen zweiten Drehwinkel (α2) gedreht wird, wobei die erste Dreheinrichtung (1) und die zweite Dreheinrichtung (2) in Transportrichtung (x) hintereinander angeordnet sind und jede Dreheinrichtung (1, 2) Drehmittel (1a, 1b; 2a, 2b) umfasst, welche das Gut (10) zum Drehen in Eingriff nehmen, **dadurch gekennzeichnet, dass** die Drehmittel (1a, 1b) der ersten Dreheinrichtung (1) zu ausgewählten Zeitpunkten durch schaltbare Eingriffsmittel (5) außer Eingriff mit dem Gut (10) gebracht werden, während sich das Gut (10) in Eingriff mit den Drehmitteln (2a, 2b) der zweiten Dreheinrichtung (2) befindet.

3. Vorrichtung oder Verfahren nach Anspruch 1 oder 2, **dadurch gekennzeichnet, dass** jede Dreheinrichtung (1, 2) erste Drehmittel (la; 2a) und zweite Drehmittel (1b; 2b) aufweist, welche in Querrichtung (y) zur Transportrichtung (x) in einem lateralen Abstand (yl; y2) zueinander angeordnet sind und von einem Motor (3a, 3b; 4a, 4b) mit unterschiedlichen Drehgeschwindigkeiten drehend angetrieben werden, um das Gut (10) zu Drehen oder mit gleichen Drehgeschwindigkeiten drehend angetrieben werden, um das Gut (10) linear zu bewegen, wenn sich das Gut (10) in Eingriff mit den Drehmitteln (1a, 1b; 2a, 2b) befindet.

4. Vorrichtung oder Verfahren nach einem der Ansprüche 1 bis 3, **dadurch gekennzeichnet, dass** das Gut (10) zumindest während einer ersten Drehdauer (t1) von den schaltbaren Eingriffsmitteln (5) in Eingriff mit den Drehmitteln (1a, 1b) der ersten Dreheinrichtung (1) gebracht wird, um das Gut (10) in der ersten Dreheinrichtung (1) um einen ersten Drehwinkel (α1) zu drehen, und dass die schaltbaren Eingriffsmittel (6) während dieser ersten Drehdauer (t1) das Gut (10) außer Eingriff mit den Drehmitteln (2a, 2b) der zweiten Dreheinrichtung (2) bringen.

5. Vorrichtung oder Verfahren nach Anspruch 4, **dadurch gekennzeichnet, dass** das Gut (10) nach Ablauf der ersten Drehdauer (t1) und wenigstens über eine zweite Drehdauer (t2) von den schaltbaren Eingriffsmitteln (6) in Eingriff mit den Drehmitteln (2a, 2b) der zweiten Dreheinrichtung (2) gebracht wird, um das Gut (10) in der zweiten Dreheinrichtung (2) um einen zweiten Drehwinkel (α2) zu drehen, und dass die schaltbaren Eingriffsmittel (5) während dieser zweiten Drehdauer (t2) das Gut (10) außer Eingriff mit den Drehmitteln (1a, 1b) der ersten Dreheinrichtung (1) bringen.

6. Vorrichtung oder Verfahren nach einem der Ansprüche 4 oder 5, **dadurch gekennzeichnet, dass** das Gut (10) nach Ablauf der ersten Drehdauer (t1) in der ersten Dreheinrichtung (1) zunächst ohne Drehung linear in Transportrichtung (x) weiter bewegt und anschließend an die zweite Dreheinrichtung (2) übergeben wird, wobei zur Übergabe des Guts (10) von der ersten Dreheinrichtung (1) an die zweite Dreheinrichtung (2) die schaltbaren Eingriffsmittel (5, 6) das Gut (10) außer Eingriff mit den Drehmitteln (1a, 1b) der ersten Dreheinrichtung (1) und in Eingriff mit den Drehmitteln (2a, 2b) der zweiten Dreheinrichtung (2) bringen.

7. Vorrichtung oder Verfahren nach einem der Ansprüche 1 bis 6, **dadurch gekennzeichnet, dass** bei der Übergabe des Guts (10) von der ersten Dreheinrichtung (1) an die zweite Dreheinrichtung (2) die schaltbaren Eingriffsmittel (5, 6) das Gut (10) während einer Überlappungszeit (t3) sowohl in Eingriff mit den Drehmitteln (1a, 1b) der ersten Dreheinrichtung (1) als auch in Eingriff mit den Drehmitteln (2a, 2b) der zweiten Dreheinrichtung (2) halten, wobei das Gut (10) während der Überlappungszeit (t3) bevorzugt mit gleichbleibender Geschwindigkeit linear und ohne Drehung in Transportrichtung (x) bewegt wird.

8. Vorrichtung oder Verfahren nach Anspruch 6 oder 7, **dadurch gekennzeichnet, dass** das Gut (10) nach Übergabe an die zweite Dreheinrichtung (2) zunächst ohne Drehung linear in Transportrichtung (x) weiter bewegt und anschließend während einer zweiten Drehdauer (t2) in der zweiten Dreheinrichtung (2) um einen zweiten Drehwinkel (α2) gedreht wird.

9. Vorrichtung oder Verfahren nach einem der voranstehenden Ansprüche, **dadurch gekennzeichnet, dass** die Summe des ersten Drehwinkels (α1) und des zweiten Drehwinkels (α2) kleiner oder gleich dem Gesamt-Drehwinkel (α) ist, welcher insbesondere 90° beträgt.

10. Vorrichtung oder Verfahren nach einem der voranstehenden Ansprüche, **dadurch gekennzeichnet, dass** es sich bei den Drehmitteln um Drehrollenpaare (1a, 1b; 2a, 2b) mit zueinander korrespondierenden Rollen handelt und dass die schaltbaren Eingriffsmittel (5, 6) korrespondierende Rollen der Drehrollenpaare aufeinander zu bzw. voneinander weg bewegen, um das Gut (10) in bzw. außer Eingriff mit den korrespondierenden Rollen der Drehrollenpaare (1a, 1b; 2a, 2b) zu bringen.

11. Vorrichtung oder Verfahren nach einem der Ansprüche 3 bis 10, **dadurch gekennzeichnet, dass** der laterale Abstand (y1, y2) der korrespondierenden Drehmittel (1a, 1b; 2a, 2b) der ersten Dreheinrichtung (1) und/oder der zweiten Dreheinrichtung (2) einstellbar und insbesondere an das Format des Guts (10) anpassbar ist.

12. Vorrichtung oder Verfahren nach einem der voranstehenden Ansprüche, **dadurch gekennzeichnet, dass** in Transportrichtung (x) vor der ersten Dreheinrichtung (1) eine Einzugseinrichtung (17) angeordnet ist, welche das sich in der ersten Orientierung (a) befindliche Gut (10) linear in Transportrichtung (x) bewegt und an die erste Dreheinrichtung (1) übergibt und dass in Transportrichtung (x) nach der zweiten Dreheinrichtung (2) eine Transporteinrichtung (18) angeordnet ist, welche das aus der zweiten Dreheinrichtung (2) kommende Gut (10) übernimmt und linear in Transportrichtung (x) weiter bewegt und an eine ggf. vorhandene weitere Dreheinrichtung oder an eine Nachläufereinrichtung (9), insbesondere eine Ausrichteinrichtung zum Ausrichten des Guts (10) übergibt.

## Claims

1. Device for rotating flat items (10) moved in a transport direction (x), in particular sheets or sheet stacks, from a first orientation (a) to a second orientation (b) about a preset total angle of rotation (α), having a first rotation device (1), in which the item (10) is rotated first of all about a first angle of rotation (α1) and having at least one second rotation device (2), in which the item (10) is rotated later about a second angle of rotation (α2), wherein the first rotation device (1) and the second rotation device (2) are arranged one behind another in transport direction (x) and each rotation device (1, 2) comprises rotation means (1a, 1b; 2a, 2b) which engage the item (10) for rotation, **characterised in that** at least the first rotation device (1) has switchable engagement means (5, 6), with which the rotation means (1a, 1b; 2a, 2b) can be engaged with or disengaged from the item (10) at selected points in time.

2. Method for rotating flat items (10) moved in a transport direction (x), in particular sheets or sheet stacks, from a first orientation (a) to a second orientation (b) about a preset total angle of rotation (α), having a first rotation device (1), in which the item (10) is rotated first of all about a first angle of rotation (α1) and having at least one second rotation device (2), in which the product (10) is rotated later about a second angle of rotation (α2), wherein the first rotation device (1) and the second rotation device (2) are arranged one behind another in transport direction (x) and each rotation device (1, 2) comprises rotation means (1a, 1b; 2a, 2b) which engage the item (10) for rotation, **characterised in that** the rotation means (1a, 1b) of the first rotation device (1) are disengaged from the item (10) by switchable engagement means (5) at selected points in time while the item (10) is engaged with the rotation means (2a, 2b) of the second rotation device (2).

3. Device or method according to claim 1 or 2, **characterised in that** each rotation device (1, 2) has first rotation means (1a; 2a) and second rotation means (1b; 2b) which in transverse direction (y) to the transport direction (x) are arranged at a lateral distance (y1; y2) to one another and are driven in rotating manner by a motor (3a, 3b; 4a, 4b) at different rotational speeds to rotate the item (10) or are driven in rotating manner at the same rotational speeds to move the item (10) linearly if the item (10) is engaged with the rotation means (1a, 1b; 2a, 2b).

4. Device or method according to one of claims 1 to 3, **characterised in that** the item (10) at least during a first rotation period (t1) is engaged with the rotation means (1a, 1b) of the first rotation device (1) by the switchable engagement means (5) to rotate the item (10) in the first rotation device (1) about a first angle of rotation (α1), and **in that** the switchable engagement means (6) during this first rotation period (t1) disengage the item (10) from the rotation means (2a, 2b) of the second rotation device (2).

5. Device or method according to claim 4, **characterised in that** the item (10), after lapsing of the first rotation period (t1) and at least over a second rotation period (t2), is engaged with the rotation means (2a, 2b) of the second rotation device (2) by the switchable engagement means (6) to rotate the item (10) in the second rotation device (2) about a second angle of rotation (α2), and **in that** the switchable engagement means (5) during this second rotation period (t2) disengage the item (10) from the rotation means (1a, 1b) of the first rotation device (1).

6. Device or method according to one of claims 4 or 5, **characterised in that** the item (10), at the end of the first rotation period (t1) in the first rotation device (1), is further moved first of all without rotation linearly in transport direction (x) and then is delivered to the second rotation device (2), wherein to deliver the item (10) from the first rotation device (1) to the second rotation device (2), the switchable engagement means (5, 6) disengage the item (10) from the rotation means (1a, 1b) of the first rotation device (1) and engage with the rotation means (2a, 2b) of the second rotation device (2).

7. Device or method according to one of claims 1 to 6, **characterised in that** during transfer of the item (10) from the first rotation device (1) to the second rotation device (2), the switchable engagement means (5, 6) keep the item (10) during an overlapping time (t3) both engaged with the rotation means (1a, 1b) of the first rotation device (1) and engaged with the rotation means (2a, 2b) of the second rotation device (2), wherein the item (10) during the overlapping time (t3) is preferably moved at constant speed linearly and without rotation in transport direction (x).

8. Device or method according to claim 6 or 7, **characterised in that** the item (10), after transfer to the second rotation device (2), is further moved first of allwithout rotation linearly in transport direction (x) and then during a second rotation period (t2) in the second rotation device (2) is rotated about a second angle of rotation (α2).

9. Device or method according to one of the preceding claims, **characterised in that** the sum of the first angle of rotation (α1) and of the second angle of rotation (α2) is less than or equal to the total angle of rotation (α), which is in particular 90°.

10. Device or method according to one of the preceding claims, **characterised in that** the rotation means are rotating roller pairs (1a, 1b; 2a, 2b) with rollers corresponding to one another and **in that** the switchable engagement means (5, 6) move corresponding rollers of the rotating roller pairs towards one another or away from one another to engage the item (10) with or disengage it from the corresponding rollers of the rotating roller pairs (1a, 1b; 2a, 2b).

11. Device or method according to one of claims 3 to 10, characterisedin that the lateral distance (y1, y2) of the corresponding rotationmeans (1a, 1b; 2a, 2b) of the first rotation device (1) and/or of the second rotation device (2) can be adjusted and in particular can be adapted to the size of the item (10).

12. Device or method according to one of the preceding claims, **characterised in that** in transport direction (x) before the first rotation device (1) is arranged a feed device (17) which moves the item (10) located in the first orientation (a) linearly in transport direction (x) and transfers it to the first rotation device (1) and **in that** in transport direction (x) after the second rotation device (2) is arranged a transport device (18) which accepts the item (10) coming from the second rotation device (2) and further moves it linearly in transport direction (x) and transfers it to an optionally present further rotation device or to a follower device (9), in particular an alignment device for aligning the item (10).

## Revendications

1. Dispositif servant à faire tourner des articles (10) plats déplacés dans une direction de transport (x), en particulier des feuilles ou des piles de feuilles, depuis une première orientation (a) dans une deuxième orientation (b) autour d'un angle de rotation global (α) prédéfini, avec un premier système de rotation (1), dans lequel l'article (10) est tourné, dans un premier temps, autour d'un premier angle de rotation (α1), et avec au moins un deuxième système de rotation (2), dans lequel l'article (10) est tourné ultérieurement autour d'un deuxième angle de rotation (α2), dans lequel le premier système de rotation (1) et le deuxième système de rotation (2) sont disposés l'un derrière l'autre dans la direction de transport (x) et chaque système de rotation (1, 2) comprend des moyens de rotation (1a, 1b ; 2a, 2b), qui viennent en prise avec l'article (10) aux fins de la rotation, **caractérisé en ce qu'**au moins le premier système de rotation (1) présente des moyens de prise (5, 6) pouvant être commutés, à l'aide desquels les moyens de rotation (1a, 1b ; 2a, 2b) peuvent être mis en prise avec l'article (10) ou désengagés de celui-ci à des moments sélectionnés.

2. Procédé servant à faire tourner des articles (10) plats déplacés dans une direction de transport (x), en particulier des feuilles ou des piles de feuilles, depuis une première orientation (a) dans une deuxième orientation (b) autour d'un angle de rotation global (α) prédéfini, avec un premier système de rotation (1), dans lequel l'article (10) est tourné, dans un premier temps, autour d'un premier angle de rotation (α1), et avec au moins un deuxième système de rotation (2), dans lequel l'article (10) est tourné ultérieurement autour d'un deuxième angle de rotation (α2), dans lequel le premier système de rotation (1) et le deuxième système de rotation (2) sont disposés l'un derrière l'autre dans la direction de transport (x) et chaque système de rotation (1, 2) comprend des moyens de rotation (1a, 1b ; 2a, 2b), qui viennent en prise avec l'article (10) aux fins de la rotation, **caractérisé en ce que** les moyens de rotation (1a, 1b) du premier système de rotation (1) peuvent être désengagés de l'article (10) à des moments sélectionnés par des moyens de prise (5) pouvant être commutés, tandis que l'article (10) est en prise avec les moyens de rotation (2a, 2b) du deuxième système de rotation (2).

3. Dispositif ou procédé selon la revendication 1 ou 2, **caractérisé en ce que** chaque système de rotation (1, 2) présente des premiers moyens de rotation (la ;2a) et des deuxièmes moyens de rotation (1b ; 2b), qui sont disposés les uns par rapport aux autres dans la direction transversale (y) par rapport à la direction de transport (x) à une distance latérale (y1 ;y2) et sont entraînés en rotation par un moteur (3a, 3b ; 4a, 4b) à des vitesses de rotation différentes, afin d'entraîner l'article (10) pour l'amener à tourner ou en rotation à des vitesses de rotation identiques afin de déplacer l'article (10) de manière linéaire quand l'article (10) est en prise avec les moyens de rotation (1a, 1b ; 2a, 2b).

4. Dispositif ou procédé selon l'une quelconque des revendications 1 à 3, **caractérisé en ce que** l'article (10) est mis en prise, au moins au cours d'une première durée de rotation (t1), par les moyens de prise (5) pouvant être commutés, avec les moyens de rotation (1a, 1b) du premier système de rotation (1) afin de faire tourner l'article (10) dans le premier système de rotation (1) autour d'un premier angle de rotation (α1), et que les moyens de prise (6) pouvant être commutés désengagent l'article (10) des moyens de rotation (2a, 2b) du deuxième système de rotation (2) au cours de ladite première durée de rotation (t1).

5. Dispositif ou procédé selon la revendication 4, **caractérisé en ce que** l'article (10) est mis en prise avec les moyens de rotation (2a, 2b) du deuxième système de rotation (2) à l'issue de la première durée de rotation (t1) et au moins sur une deuxième durée de rotation (t2) par les moyens de prise (6) pouvant être commutés afin de faire tourner l'article (10) dans le deuxième système de rotation (2) autour d'un deuxième angle de rotation (α2), et que les moyens de prise (5) pouvant être commutés désengagent l'article (10) des moyens de rotation (1a, 1b) du premier système de rotation (1) au cours de ladite deuxième durée de rotation (t2).

6. Dispositif et procédé selon l'une quelconque des revendications 4 ou 5, **caractérisé en ce que** l'article (10) continue à être déplacé à l'issue de la première durée de rotation (t1) dans le premier système de rotation (1) dans un premier temps sans rotation de manière linéaire dans la direction de transport (x) et est transféré ensuite au deuxième système de rotation (2), dans lequel les moyens de prise (5, 6) pouvant être commutés désengagent l'article (10) des moyens de rotation (1a, 1b) du premier système de rotation (1) et les mettent en prise avec les moyens de rotation (2a, 2b) du deuxième système de rotation (2) aux fins du transfert de l'article (10) du premier système de rotation (1) au deuxième système de rotation (2).

7. Dispositif ou procédé selon l'une quelconque des revendications 1 à 6, **caractérisé en ce que** lors du transfert de l'article (10) du premier système de rotation (1) au deuxième système de rotation (2), les moyens de prise (5, 6) pouvant être commutés maintiennent l'article (10) au cours d'un temps de chevauchement (t3) à la fois en prise avec les moyens de rotation (1a, 1b) du premier système de rotation (1) et en prise avec les moyens de rotation (2a, 2b) du deuxième système de rotation (2), dans lequel l'article (10) est déplacé au cours du temps de chevauchement (t3) de manière préférée à une vitesse constante de manière linéaire et sans rotation dans la direction de transport (x).

8. Dispositif ou procédé selon la revendication 6 ou 7, **caractérisé en ce que** l'article (10) continue à être déplacé après le transfert au deuxième système de rotation (2) dans un premier temps sans rotation de manière linéaire dans la direction de transport (x) et est tourné ensuite au cours d'une deuxième durée de rotation (t2) dans le deuxième système de rotation (2) autour d'un deuxième angle de rotation (α2).

9. Dispositif ou procédé selon l'une quelconque des revendications précédentes, **caractérisé en ce que** la somme du premier angle de rotation (α1) et du deuxième angle de rotation (α2) est inférieure ou égale à l'angle de rotation global (α), qui présente en particulier une valeur de 90°.

10. Dispositif ou procédé selon l'une quelconque des revendications précédentes, **caractérisé en ce que** les moyens de rotation sont des paires de galets de rotation (1a, 1b ; 2a, 2b) avec des galets correspondant les uns aux autres, et que les moyens de prise (5, 6) pouvant être commutés déplacent des galets correspondants des paires de galets de rotation les uns vers les autres ou de manière à les écarter les uns des autres, afin de mettre en prise l'article (10) avec les galets correspondants des paires de galets de rotation (1a, 1b ; 2a, 2b) ou de le désengager de ceux-ci.

11. Dispositif ou procédé selon l'une quelconque des revendications 3 à 10, **caractérisé en ce que** la distance latérale (y1, y2) des moyens de rotation (la,lb ; 2a, 2b) correspondants du premier système de rotation (1) et/ou du deuxième système de rotation (2) peut être réglée et en particulier peut être adaptée au format de l'article (10).

12. Dispositif et procédé selon l'une quelconque des revendications précédentes, **caractérisé en ce qu'**est disposé dans la direction de transport (x) avant le premier système de rotation (1) un système d'alimentation (17), qui déplace l'article (10) se trouvant dans la première orientation (a) de manière linéaire dans la direction de transport (x) et le transfère au premier système de rotation (1), et qu'est disposé dans la direction de transport (x) après le deuxième système de rotation (2), un système de transport (18), qui réceptionne l'article (10) provenant du deuxième système de rotation (2) et continue à le déplacer de manière linéaire dans la direction de transport (x) et le transfère à un autre système de rotation éventuellement présent ou à un système suiveur (9), en particulier un système d'alignement servant à aligner l'article (10).
